# EUROPEAN PATENT APPLICATION

(11) **EP 2 530 897 A1**
(43) Date of publication of application: **05.12.2012**
(21) Application number: 11290248.1
(22) Date of filing: 01.06.2011
(51) Int. Cl.: H04L 29/06, H04L 29/08

(54) **Content delivery architecture and method**

(71) Applicant: Alcatel Lucent, 75007 Paris (FR)
(72) Inventor: Verhoeyen, Marc, 9700 Oudenaarde (BE); De Vriendt, Johan A., 9051 Afsnee (BE)
(74) Representative: Script IP Limited

(57) **Abstract**

A content delivery architecture comprises an intermediate domain via which content is transferable from content providers in at least one content provider domain to consumers in at least one consumer domain. A delivery layer is included having a content store in the intermediate domain for storing content from content providers in the at least one content provider domain for delivery to a consumer. A discovery layer has a content metadata store in the intermediate domain for storing metadata associated with content available from the content store and from content providers in the at least one content provider domain. A support and service layer administers the delivery of content from the content store, and from content providers in the at least one content provider domain, to a consumer using metadata stored in the content metadata store.

## Description

### FIELD OF THE INVENTION

The present invention relates to a content delivery architecture and method.

### BACKGROUND

Various types of Content Delivery Network (CDN) are available which enable content to be distributed from content sources, such as content providers or content authors, to consumers, who may themselves be content providers and/or owners, for example, by supplying the same content to others or content derived from that content. A CDN may include local caches, for example, so that content obtained from content sources may be held for local access by end users, in an effort to reduce loading on network resources. User profiles may be used to personalize content delivery.

### BRIEF SUMMARY

According to a first aspect of the invention, a content delivery architecture comprises an intermediate domain via which content is transferable from content providers in at least one content provider domain to consumers in at least one consumer domain. A delivery layer is included having a content store in the intermediate domain for storing content from content providers in the at least one content provider domain for delivery to a consumer. A discovery layer has a content metadata store in the intermediate domain for storing metadata associated with content available from the content store and from content providers in the at least one content provider domain. A support and service layer administers the delivery of content from the content store, and from content providers in the at least one content provider domain, to a consumer using metadata stored in the content metadata store. Other information and mechanisms may be used by the support and service layer to administer content delivery in addition to the metadata stored in the content metadata store.

A domain may relate to an independent entity, such as a telecommunications company, that is responsible for providing the domain and that entity's domain may connect with other domains provided by different entities. An intermediate domain is a network domain that contains neither source nor sink for particular content under consideration. An architecture may include a plurality of intermediate domains or a single intermediate domain.

The content provider may be a content owner, author or some other source of the content, and a content provider domain may be considered as a source domain. The consumer may be an end-user, or may be a user that in themselves acts as a source of the content or of content that is derived from or based on the content, for example. The user may be an individual person or some other entity. Thus, the consumer may be considered to be a sink and the consumer domain is a sink domain. The sink domain and source domain may include similar functions as the intermediate domain in addition to the specific source and sink functions. An architecture in accordance with the invention may include at least one source domain and/or at least one sink domain.

The quality of experience of a content consumer depends on content delivery and discovery systems, and the service with associated support. An embodiment in accordance with the invention may enable a more integrated approach to content delivery to be achieved, aiming to improve customer satisfaction and provide efficient use of network resources such as storage, processing and transport and the like.

In an embodiment, the support and service layer includes a user profile store and the discovery layer includes a recommendation engine for recommending content to a consumer, the recommendation engine using information from the user profile store and from the content metadata store in making the recommendation. The recommendation engine may use other additional information, for example, a celebrity' choice of movies in the case of on demand video. The user profile may, for example, indicate content requested by the consumer previously so that similar content may be deemed of interest to that consumer, or content requested by other consumers with similar user profiles may be deemed to be of interest to the consumer. The recommendation may also be driven, for example, by content providers or other considerations. Newly available content, for example, may be arranged to be ranked more highly by a recommendation engine.

In another embodiment, no user profile store and/or recommendation engine is available. In such an embodiment, the consumer may simply enter a request and not receive any recommendations as to content and/or there may be no user profile store. Even though this may result in reduced or no personalization, such an arrangement may still provide a benefit in allowing available content from content providers to be made discoverable using associated content metadata.

In an embodiment, a user profile store is updated with consumer information obtained from consumer requests for content Other mechanisms could be used instead or in addition to refine a user profile, for example, by drawing on information from other systems not concerned with content delivery.

In an embodiment, the support and service layer includes a content popularity processor for monitoring the popularity of content and the recommendation engine uses information regarding content popularity from the content popularity processor in making a recommendation. In other embodiments, no content popularity processor is included and the recommendation engine receives inputs from other means.

In an embodiment, a delivery mechanism is included for streaming content from the content store to a consumer. The content may be video or audio, for example. In another embodiment, content is downloaded to the consumer for later access by the consumer.

In one embodiment, the intermediate domain comprises a plurality of sub-domains.

In an embodiment, a split in what can be handled locally in the intermediate domain itself and what is to be handled by an adjacent domain may be implemented, allowing for different stakeholders to deal with all layer functions in an autonomous way, yet fulfilling overall layer and end-to-end functionality.

It is possible to have different domain configurations, for example, combining two domains into one new domain and two sub-domains. This may be advantageous where an Application and Content Provider carrying out content discovery is to cooperate with a telecommunication company to achieve the same result for discovery and delivery of content as if the telecommunication company had its own domain.

According to a second aspect of the invention, a method for content delivery comprises: transferring content via an intermediate domain from content providers in at least one content provider domain to consumers in at least one consumers domain; in a delivery layer, storing content in the intermediate domain from content providers in the at least one content provider domain for delivery of content to a consumer; in a discovery layer, storing metadata in the intermediate domain, the metadata being associated with stored content from the stored content store and content available from content providers in the at least one content provider domain; and in a support and service layer, administering the delivery of stored content, and from content providers in the at least one content provider domain, to a consumer using stored metadata.

### BRIEF DESCRIPTION OF THE DRAWINGS

Some embodiments of the present invention will now be described by way of example only, and with reference to the accompanying drawings, in which:
Figure 1 schematically illustrates a content delivery architecture;
Figure 2 schematically illustrates an aspect of the architecture of Figure 1; and
Figure 3 schematically illustrates an intermediate domain of the architecture of Figures 1 and 2.

### DETAILED DESCRIPTION

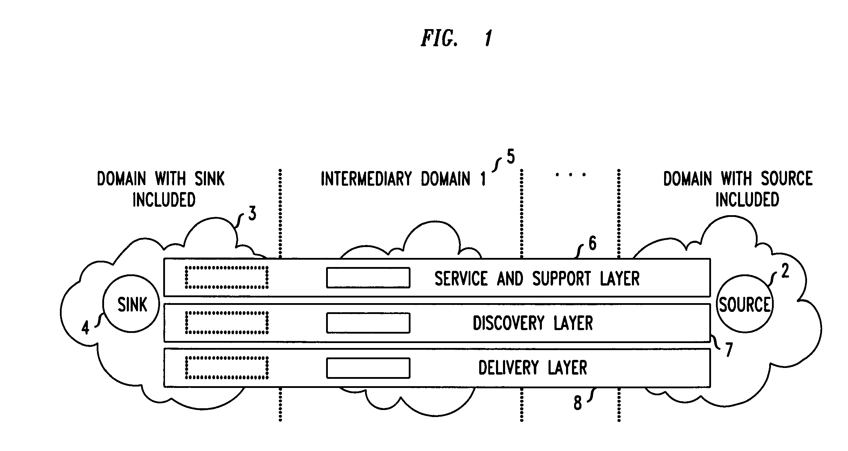

With reference to Figure 1, a content delivery architecture includes a source domain 1 having a source or sources 2, a sink domain 3 with a sink or sinks 4 and at least one intermediate domain 5 located between the source domain 1 and sink domain 3. Three layers extend from the source domain 1 to the sink domain 3 via the intermediate domain 5.

The first layer is a service and support layer 6 which deals with user requests for content. The second layer is a discovery layer 7 which enables exposure of content to a user that is likely to be of interest to him or her. The third layer is a delivery layer 8 by which content is delivered to the user.

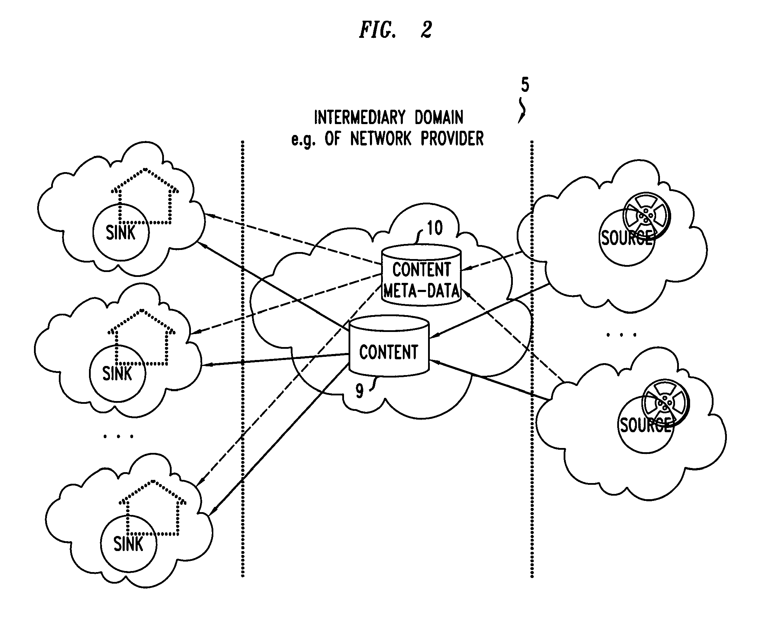

The intermediate domain 5 acquires content from the source domain 1, as illustrated in Figure 2, and stores it in a content store 9 which is located in the intermediate domain 5. Metadata associated with the content is also held in metadata store 10 in the intermediate domain 5.

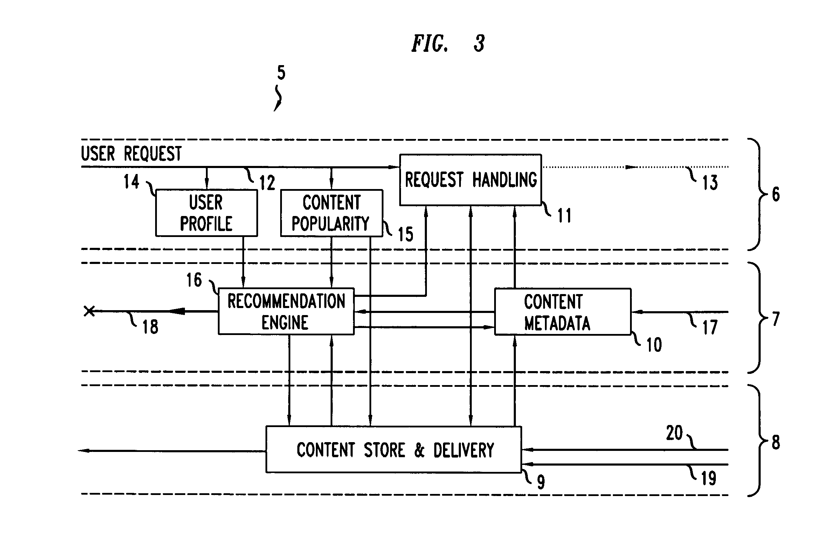

The intermediate domain 5 and interworking between the different layers is shown in more detail in Figure 3.

The support and service layer 6 includes a request handling processor 11 that receives a user request at 12 for content. The request handling processor 11 may access content metadata from the metadata store 10 to determine if the user request should be fulfilled locally within the intermediate domain 5 or if the request should be transmitted at 13 to adjacent domains. The content metadata store 10 is updated with content presence information from the content store 9 or via the recommendation engine 16.

In another arrangement, the request handling processor 11 receives information via the recommendation engine 16 to determine if a user request can be handled locally. Both arrangements may be used together so as to provide inputs to the request handling processor 11 from both the content metadata store 10 and via the recommendation engine 16. The user request is also sent to a user profile store 14 so that the profile can be updated to take into account content requested by the user. The user request is also sent to a content popularity data store 15 which keeps track of what content is requested by users. Content items which prove to be currently more often requested by users associated with the intermediate domain 5 may be identified and ingested to the content store 9 so that popular content is readily available for delivery to users from the intermediate domain 5.

The discovery layer 7 includes a recommendation engine 16 and the content metadata store 10. At input 17, the content metadata store 10 ingests metadata associated with content for which service and support is available. This provides an aggregation function in which metadata of content catalogues from upstream sources, via adjacent domains, is brought together in the content metadata store 10. Metadata for content which cannot be handled by the service and support layer is not held in the content metadata store 10. The recommendation engine 16 provides personalized recommendations at 18 to a user for content that is likely to be of interest. The recommendation engine 16 receives data from the user profile store 14 as one of its inputs. It also receives data from the content metadata store 10 to inform it as to what content items are available within the intermediate domain 5 and adjacent domains. Content items that do not have associated metadata held in the metadata store 10 are not considered by the recommendation engine. Additionally, the recommendation engine 16 receives information from a content popularity processor 15 about the popularity of content and information regarding content held locally in the content store 9. The content popularity processor 15 uses an algorithm based on user requests to determine content popularity.

The delivery layer 8 is arranged so that it enables popular content to be located close to the user, thus reducing latency. The content store 9 ingests content at 19 based on content popularity from content popularity processor 15, indications from the recommendation engine 16 and pre-ingestion of content listed near the top of personalized recommendations. In addition, there may also be dynamic ingestion at 20 of recommended content if the content is not available in content store 9 at the moment when the user request is received. The content store 9 delivers requested content on instruction from request handling processor 11 and in this embodiment streams it to the user, to provide low latency retrieval of, and interactivity with, content and give good user satisfaction. In other embodiments, the content may be downloaded, for example, and stored on the user's equipment.

From the foregoing, it may be appreciated that the layers depend on each other. The first layer 6 assumes service and support for only that content that can be discovered in the discovery layer 7. That is, support and service layer 6 only deals with content for which the network provider has the metadata, this being data considered in the recommendation engine 16. The discovery layer 7 includes the metadata of the content that can either be handled locally by the content delivery layer 8 or can be obtained via an adjacent domain to deliver the discovered content.

The support and service layer 6 interacts with the delivery layer 8, for example, to provide content popularity data, such that the delivery layer 8 can organize itself to acquire stored content such that the network usage may be optimized.

There may be more than one intermediate domain in a network, which may be arranged as cascade, for example, or in more complex relationships such as, for example, in a grid arrangement. Adjacent domains may co-operate with the intermediate domain at all layers.

Although components are shown as single entities in the figures, it should be appreciated that a distributed system within the domain can be applied also, for example, using similar principles for interaction between sub-domains as for that between domains. This characteristic in particular enables optimization of network resource usage optimized because storage, processing and transport can be located at any place or network node in the network. For example, popular content may be placed closest the source of requests for this content, that is usually the user.

By using the embodiment shown in Figure 3, for example, consumer experience is improved. Quality of experience is optimized for consumer when user requests for content can be handled within the domain and also when a user can easily find content of interest. By handling user requests within the domain, it leads to low latency and reduced or no congested delivery as resources are dimensioned per domain on the basis of anticipated amount of consumers requests and its characteristics, such as percent of simultaneous users. For a user to find content easily, discovery systems prioritize content according to the user profiles. This can give good results as a profile is built using past history service requests within the domain. Any service that adds data to the user profile to better characterize a user and distinguish a user from other users may be useful.

Low latency for delivery of content after it has been requested may be guaranteed for content already ingested into the domain delivery components. For other selected content, a dynamic ingestion from an upstream domain/source is needed. With knowledge of the adjacent domain behavior, for example, maximum latency, end-of-ingest notification and the like, a controlled service to the downstream adjacent domain/user is achieved. The dynamically ingested content may be delivered directly to the user while ingesting or may first be stored in the content store and subsequently streamed to the user. The intermediate storing permits, for example, speed fluctuations of content delivery from adjacent domains to be hidden.

The discovery system provides content choices to the user that are derived from a metadata store may be built over all adjacent domains for which the subject domain provides consumer support, for example, billing and/or hclpdesk services. This makes the consumer support scalable and hence it may be guaranteed because resources such as operating support systems and personnel are dimensioned according to domain needs.

The quality of user experience is better when personalized content discovery and selection is for content that is already present in the domain delivery component(s). Therefore, the amount of content that is present in a domain prior to content request is preferably maximized, for example, by use of large domain storage capacity and good domain popularity measurements for each relevant content item. Also, pre-ingested content may be influenced by recommendations made to the users.

Avoiding non-hit requests can be influenced by explicit interaction between the discovery and delivery layer as may be seen by the following, non-exhaustive, possibilities.

The delivery layer may be arranged to typically retain popular content items, with the most popular items taken as input for possible recommendation to consumers. The delivery layer may inform the discovery layer with information about the hit ratio and the request rate, for example. Other information may also be provided, The hit ratio is the ratio of the request rate, that is, the number of content requests over a given time period, for items that can be served from the content store in the intermediate domain and the total request rate. If the hit ratio is low, the discovery layer can consequently increase the amount of personalized content items that are cached at the content store, so as to increase the hit ratio and quality of experience for delivery. The larger the request rate, the higher the hit ratio should be to effectively lower the need to deliver from the source domain. Therefore, the tuning of recommendation lists to the content in the content store may be more important in case of high request rates.

From discovery to delivery layer, content items that are recommended to many consumers associated with a certain domain have a high likelihood of being selected. The most recommended items may be pre-ingested into the delivery system at the expense of some potentially less popular items.

There is a bi-directional interaction in which recommendations are influenced by what content is stored, and also what content is stored depends on the recommendations list. Thus, very popular content will not drop easily from the delivery system, while promoted content, where it is anticipated it will be highly popular, will enter the delivery system.

The functions of the various elements shown in the figures, including any functional blocks denoted as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (TPGA), read only memory (ROM) for storing software, random access memory (RAM), and non volatile storage. Other hardware, conventional and/or custom, may also be included.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims arc to be embraced within their scope.

## Claims

1. A content delivery architecture comprising:
an intermediate domain via which content is transferable from content providers in at least one content provider domain to consumers in at least one consumer domain;
a delivery layer having a content store in the intermediate domain for storing content from content providers in the at least one content provider domain for delivery to a consumer;
a discovery layer having a content metadata store in the intermediate domain for storing metadata associated with content available from the content store and from content providers in the at least one content provider domain; and
a support and service layer for administering the delivery of content from the content store, and from content providers in the at least one content provider domain, to a consumer using metadata stored in the content metadata store.

2. The architecture as claimed in claim 1 wherein the support and service layer includes a user profile store and the discovery layer includes a recommendation engine for recommending content to a consumer, the recommendation engine using information from the user profile store and from the content metadata store in making the recommendation.

3. The architecture as claimed in claim 2 wherein the user profile store is updated with consumer information obtained from consumer requests for content.

4. The architecture as claimed in claim 2 or 3 wherein the recommendation engine and the content store exchange information concerning delivery and the exchanged information including at least one of: availability of content stored in the content store; hit ratio; and request rate.

5. The architecture as claimed in claim 2, 3 or 4 wherein the support and service layer includes a content popularity processor for monitoring the popularity of content and the recommendation engine uses information regarding content popularity from the content popularity processor in making a recommendation.

6. The architecture as claimed in claim 5 wherein the content popularity processor receives information from consumer requests for content.

7. The architecture as claimed in any preceding claim wherein the content store is arranged to retain more popular content and discard less popular content.

8. The architecture as claimed in claim 7 when dependent on any of claims 2 to 6 wherein more popular content is determined by the recommendation engine.

9. The architecture as claimed in any preceding claim wherein the content metadata store stores metadata associated only with content for which support and service is available.

10. The architecture as claimed in any preceding claim and including a delivery mechanism for streaming content from the content store to a consumer.

11. The architecture as claimed in any preceding claim wherein, when a consumer requests content available from a content provider or content providers in the at least one content provider domain and not stored in the content store, the delivery layer transfers the requested content to the consumer from said content provider or content providers without storing the content in the content store.

12. The architecture as claimed in any preceding claim wherein the hit ratio is used in determining the amount of recommended content stored in the content store.

13. The architecture as claimed in claim 12 wherein the request rate is used in determining the amount of recommended content stored in the content store.

14. The architecture as claimed in any preceding claim wherein the intermediate domain comprises a plurality of sub-domains, each sub-domain including:
an intermediate domain via which content is transferable from content providers in at least one content provider domain to consumers in at least one consumer domain;
a delivery layer having a content store in the intermediate domain for storing content from content providers in the at least one content provider domain for delivery to a consumer;
a discovery layer having a content metadata store in the intermediate domain for storing metadata associated with content available from the content store and from content providers in the at least one content provider domain; and
a support and service layer for administering the delivery of content from the content store, and from content providers in the at least one content provider domain, to a consumer using metadata stored in the content metadata store.

15. The architecture as claimed in any preceding claim and including at least one source domain and/or sink domain.

16. A method for content delivery comprising:
transferring content via an intermediate domain from content providers in at least one content provider domain to consumers in at least one consumers domain;
in a delivery layer, storing content in the intermediate domain from content providers in the at least one content provider domain for delivery of content to a consumer;
in a discovery layer, storing metadata in the intermediate domain, the metadata being associated with stored content from the stored content store and content available from content providers in the at least one content provider domain; and
in a support and service layer, administering the delivery of stored content, and content available from content providers in the at least one content provider domain, to a consumer using stored metadata.

17. The method as claimed in claim 16 and recommending content to a consumer using information from a user profile store included in the support and service layer and information from the stored content metadata and information from the delivery layer including at least one of: availability of content stored in the content store; hit ratio; and request rate.

18. The method as claimed in claim 16 or 17 and including monitoring the popularity of content and using information regarding content popularity in making a content recommendation to a consumer.

19. The method as claimed in claim 18 wherein more popular content is determined by the recommendation engine.

20. The method as claimed in claim 16, 17, 18 or 19 wherein the stored content metadata is metadata associated only with content for which support and service is available.
